# EUROPEAN PATENT APPLICATION

(11) **EP 2 991 017 A1**
(43) Date of publication of application: **02.03.2016**
(21) Application number: 14382327.6
(22) Date of filing: 29.08.2014
(51) Int. Cl.: G06Q 30/00

(54) **Method and system for dynamically updating information referred to an item and computer programs thereof**

(71) Applicant: Telefónica, S.A., 28013 Madrid (ES)
(72) Inventor: Díaz Fernández, Félix, 28013 Madrid (ES); Campillo Soto, Bernardo, 28013 Madrid (ES); Tizón Bouzon, Diego, 28013 Madrid (ES)
(74) Representative: Carlos Hernando, Borja

(57) **Abstract**

The method comprising: associating to an electronic device (200) at least one item (300), both including a code (201), (301) that at least identify properties thereof, wherein said associating step includes: detecting said codes (201) and (301) by a user using a mobile computing device (100) having installed therein a computing processor (101); and the user via the computing processor (101) of said mobile computing device (100), deciding which information about the at least one item (300) should be associated to the electronic device (200); and transmitting, by the computing processor (101) of said mobile computing device (100) through a telecommunication network (500), the detected codes (201) and (301) and the decided information about said at least one item (300) to a central server (400) the latter updating, through a processor (202) installed in the electronic device (200), the information about said at least one item (300) in the electronic device (200).

## Description

### Field of the invention

The present invention generally relates to methods and systems to provide information about an item. In particular, the present invention relates to a method, a system and computer programs products for dynamically updating information referred to at least one item, said updated information, preferably, being transferred to an electronic device, for instance an electronic display, which may be located on shelves, exhibitors, etc. near the item(s).

### Background of the invention

Generally, the apparel retail stores display their items, or products, in shelves or hangers, together with a sign that gives basic information about the product such as price and components. The signs are usually printed and have to be centrally managed and distributed, and are completely static and limited in the information they can show.

The possibility of using an electronic display (i.e. screen) to show product information has been widely used in the industry in the last years when the price of these displays has lowered dramatically.

The difficulty of using displays, is the content distribution and management of the graphical assets and the association of the screen to which product has to be shown. Usually this is achieved using centralized content management systems together with digital signage applications that control the screens and depend on centralized decision on the content shown for each display.

Patent US-B1-7152040 is related with this type of solutions, describing an electronic shelf label positioned on a retail product support structure, which includes: a transceiver configured to communicate with a plurality of wireless data tags associated with a plurality of retail products, and with the transceiver further configured to communicate with a retail server system; a display configured to display information related to the plurality of retail products; and a controller configured to send data to the retail server system related to data received from at least one wireless data tag and to control the display of information on the display as a function of the retail products moved by the customer proximate to the retail product support structure and corresponding to the at least one wireless data tag. Thus this US patent provides a more flexible system for the management of an electronic shelf label, as it dynamically adapts to the specific retail products that are placed in a shelf.

Centrally operated systems have problems like associating the physical location of a display with the one that the system has recorded for the operator of the system, when there are changes or new displays are added in the system, it is difficult to decide the content to associate to the displays.

Another usual problem is the fact that displays have to be relocated if the store wants to move products around, which given the dynamic environment in retail is often happening.

Also, when several products are located in the same place it is difficult for the store to define and change which contents to show in the display.

On the other hand, systems like the electronic shelf label described in US-B1-7152040 present some limitations, namely the fact that in order to work they require retail products to be equipped with wireless data tags, which are more expensive than regular paper tags, and the electronic shelf label itself to be equipped with a transceiver able to receive information from those wireless data tags.

### Description of the Invention

To overcome those described problems and/or limitations, present invention replaces the signs that give basic information about an item (or product) with an electronic device, for instance an electronic display, which is uniquely identified and can present the basic item/product information together with other rich content of the item such as usage information and suggestions, related products, etc. The electronic display may not be limited to showing just a single static page of information, but on the contrary may iteratively present different pages of information switching from one to the following every configurable period of time.

To that end, in accordance with an object the invention provides a method for dynamically updating information referred to an item, by associating to an electronic device at least one item, both including a code that at least identify properties thereof, and by updating, a central server, through a processor installed in the electronic device, the information about the at least one item in the electronic device.

The association of the electronic device with the at least one item is preferably performed by means of using a computing processor installed in a mobile computing device of a user, through the detection of said codes; the decision of which information about the at least one item should be associated to the electronic device; and the transmission, to the central server, through a telecommunication network, of the detected codes and of the decided information in order the central server performing the item information updating in the electronic device.

Preferably, the electronic device is an electronic display. In addition, the item (or plurality of items) may be located in a retail shop, being the electronic device located on a shelf or in an exhibitor nearby the item(s).

The code identifying the electronic device and the code identifying the item(s), according to an embodiment, comprises a machine readable code including at least a barcode, a QR code, an alphanumeric code or a numeric code. In this case, the mobile computing device includes means such as a scanner and/or a camera for acquiring the codes. Alternatively, according to another embodiment, the code identifying the electronic device and the code identifying the item(s) comprises a wireless tag including at least an RFID tag or a NFC tag. In this case, the mobile computing device includes a wireless detector for acquiring the codes.

Although the detection of the codes will be preferably done automatically, via a scanner, a photo camera, or the wireless detector, among others, said detection may be also done manually by the user. For instance, in case any of said codes being a barcode or an (alpha)numerical code the user could enter the features composing the code directly in the computing processor.

The decision about which item information should be associated to the electronic device may be performed by selecting, the user via the computing processor, at least one template of a plurality of different templates of information about the item(s). The information of the selected template may include the number of pages of information to be shown iteratively by the electronic device, the number of items to be shown in each page, and their disposition within the page, item price, a price change of the item, usage information and suggestions, and/or related items.

In an embodiment, the plurality of different templates may be integrated within the central server. Then, these templates may be downloaded to the computing processor which can cache them. In an embodiment, the central server may further store the received codes and the received decided information about the item(s) in a database.

The invention in accordance with another object also provides a system for dynamically updating information referred to an item. The system includes:
- an electronic device configured to be associated with at least one item, both including a code identifying properties thereof;
- a computing processor installed in a mobile computing device of a user and related with the electronic device, the computing processor being configured to be used for performing the association of the electronic device with the at least one product by:
   - detecting said codes; and
   - deciding which information about said at least one item should be associated to said electronic device; and
- a central server configured to receive from the computing processor via a telecommunication network the detected codes and the decided information about said at least one item, and to update, through a processor installed in the electronic device, the information about said at least one item in the electronic device.

The system is adapted to implement the method(s) of the invention.

The invention further provides a computer program product comprising computer executable software stored on a computer readable medium, the software being adapted to run at a computer device or other processing means characterized in that when said computer executable software is loaded and read by said computer device or other processing means, said computer device or other processing means is able to perform any of the steps of the claimed method(s).

Present invention allows a physical identification and association of each electronic device with one or multiple items, as enabled by the detection performed by the computing processor. This provides the flexibility needed by a store, which is not limitative, being able to quickly move items and show items information updated in real time by commercial headquarters, correctly in the appropriate electronic device.

Moreover, the invention allows using the most common and cost effective item identification method, a visual code printed in a paper / cardboard tag, and precisely identifies the items.

### Brief Description of the Drawings

The previous and other advantages and features will be more fully understood from the following detailed description of embodiments, with reference to the attached drawings, which must be considered in an illustrative and non-limiting manner, in which:
Fig. 1 illustrates the architecture used in the present invention, according to some embodiments, for dynamically updating information referred to an item.

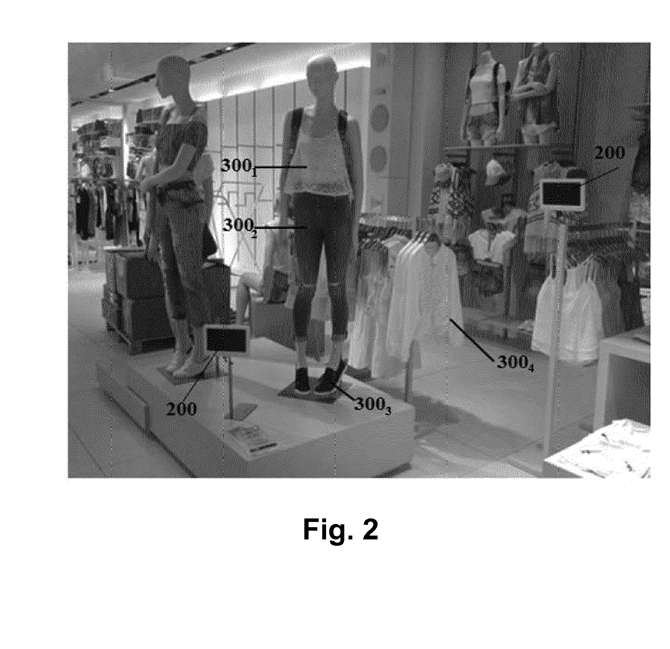

Fig. 2 is a picture showing a visual example where the electronic device of the invention may be located, according to this embodiment in an apparel retail store.

### Detailed Description of Several Embodiments

Although the description of this invention and the drawings has been done by mention of an apparel retail store, this fact has to be considered as an example only. Any person skilled in the art would appreciate, that the methods and systems of this invention can be used in a variety of other cases, including any case that require an electronic device to be updated according to criteria like the items that are dynamically associated to it.

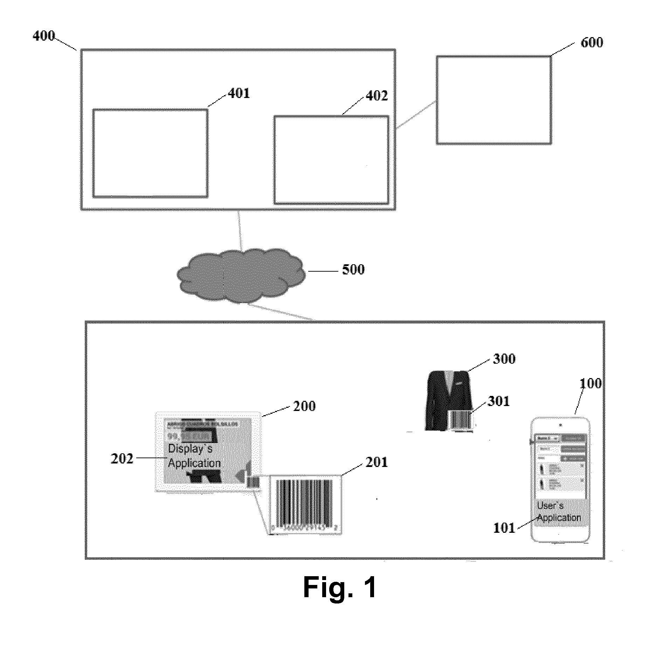

With reference to Fig. 1 it is illustrated the general architecture of the present invention. The architecture is mainly composed of:
- Electronic device 200 (preferably an electronic display): Shows electronic information and can be placed in multiple locations (in the particular case of a retail store may be placed in exhibitors, shelves, etc.) showing information of an item (or product) / set of items (or products), usually placed nearby (e.g. the retail products located in the exhibitor where the electronic display is placed).
- Code 201 or Electronic Device Identifier Code: is a code that univocally identifies each electronic device 200. It may be a visual machine readable code (e.g. a barcode, a QR code, etc.) or a wireless tag (e.g. NFC, RFID, etc.) showed via the electronic device 200 or attached to it.
- Processor 202 or electronic device application: is a software program running on the electronic device 200 using an algorithm(s) for managing the visual information shown by the electronic device 200.
- Mobile computing device 100: is a portable device (e.g. a Smartphone, a tablet, a PDA, etc.) used by a user (for instance an employee of the retail store) preferably provided with data connectivity.
- Computing processor 101: is a software program running on the mobile computing device 100, including an algorithm(s) used by the user to set the association between the electronic device 200 and the item 300 according to the teachings of this invention.
- item 300 (or product): an item that is located in some place, in this particular case in the retail store.
- Code 301 or Item Identifier Code: is a code that univocally identifies each type of item. Preferably would be placed attached to the item 300. It may be a visual machine readable code (e.g. a barcode, a QR code, etc.) or a wireless tag (e.g. NFC, RFID, etc.).
- Central server 400: is a system that receives information from the computing processor 101 about the Electronic device 200 - Item 300 association, and provides the electronic device(s) 200 with the corresponding information to be shown.
- Electronic device Information database 401: is component of the central server 400 that stores the Electronic device 200 - Item 300 association.
- Item information database 402: component of the central server that stores information of each of the item types (e.g. picture, price, description, etc.).
- Server 600: is a system that allows the supervision and management (e.g. creation, modification, control monitoring, etc.) of the information contained in the electronic device information database 401 and item information database 402.

In accordance with a preferred embodiment, to dynamically update information referred to an item, first a user (for instance a retail store employee) starts the computing processor 101 (or mobile computing device software application). Then, the Electronic Device Identifier Code 201, uniquely identifying the electronic device 200, that in accordance with this preferred embodiment is an electronic display, is detected with help of the mobile computing device 100. For instance in case the Electronic Device Identifier Code 201 is a barcode or a QR code the computing processor 101 may start the mobile computing device camera, take a photo of the code and decode it to get the electronic device identification.

After that, the user decides, via the computing processor 101, which information about the item(s) should be associated to the electronic device 200. The different information options (such as number of items, type of information, etc.) are decided according to predefined templates. The different information options may be allowed by the central server's policies, which can be set e.g. by the store's headquarters.

Then the Item Identifier Code 301 is detected with help of mobile computing device 100. The information referring the item(s) 300 is automatically obtained associating the Item Identifier Code 301 in the item information database 402. This step may be repeated for any additional Items.

Finally, the information (the detected codes 201, and 301, and the decided information) is transmitted to the central server 400 that may store the electronic device 200 - Item 300 association, as well as the previously defined information options, in the electronic device information database 401, and further send updated information to the electronic device 200 about the information to be shown and its disposition. The electronic device 200 to be updated also runs the processor 202 that receives the information from the central server 400 and shows the information according to the data and instructions provided by the central server 400.

The central server 400 may obtain information (e.g. price information) directly from the server 600, ensuring the correct price is shown in the electronic device 200, based on the association between the electronic device 200 - Item 300. Consequently, in case of changes in the item information (e.g. price change) the central server 400 immediately dispatches the new information to the electronic device 200.

While certain embodiments have been described, these embodiments have been presented by way of example only, and are not intended to limit the scope of the protection. Furthermore, various omissions, substitutions and changes in the form of the methods described herein may be made without departing from the spirit of the protection.

The scope of the invention is defined by the attached claims.

## Claims

1. A method for dynamically updating information referred to an item, the method comprising:
- associating to an electronic device (200) at least one item (300), said electronic device (200) and said at least one item (300) both including a code (201), (301) that at least identify properties thereof, wherein said associating step includes:
• detecting said codes (201) and (301) by a user using a mobile computing device (100) having installed therein a computing processor (101); and
• the user via the computing processor (101) of said mobile computing device (100), deciding which information about the at least one item (300) should be associated to the electronic device (200);
- transmitting, by the computing processor (101) of said mobile computing device (100) through a telecommunication network (500), the detected codes (201) and (301) and the decided information about said at least one item (300) to a central server (400); and
- updating, by the central server (400), through a processor (202) installed in the electronic device (200), the information about said at least one item (300) in the electronic device (200).

2. The method of claim 1, wherein:
- the electronic device (200) comprises at least an electronic display;
- the code (201) of the electronic device (200) comprises a machine readable code; and
- the code (301) of said at least one item (300) comprises a machine readable code attached to said item (300),
the machine readable code including at least a barcode, a QR code, an alphanumeric code or a numeric code, and the mobile computing device (100) including means for acquiring said codes (201), (301).

3. The method of claim 2, wherein the machine readable code of the electronic device (200) is shown via the electronic display or attached to the electronic display.

4. The method of claims 2 or 3, wherein the means for acquiring the codes (201), (301) are selected from a group at least comprising a scanner and/or a camera.

5. The method of claim 1, wherein:
- the code (201) of the electronic device (200) comprises a wireless tag; and
- the code (301) of the at least one item (300) comprises a wireless tag attached to said item (300),
the wireless tag including at least an RFID tag or a NFC tag and the mobile computing device (100) including a wireless detector for acquiring the codes (201), (301).

6. The method of claim 1, wherein said deciding about which item information should be associated to the electronic device (200) is performed by selecting, the user via the computing processor (101) of said mobile computing device (100), at least one template of a plurality of different templates of information about said at least one item (300).

7. The method of claim 6, wherein the information of said selected template includes at least one of a number of pages of information to be shown iteratively by the electronic device (200), number of items to be shown in each page, item price, price change of the item, usage information and suggestions, or related items.

8. The method of claim 6, wherein the plurality of different templates are integrated within a memory of the central server (400).

9. The method of claim 1, wherein the central server (400) further stores the received codes (201) and (301) and the received decided information about said at least one item (300) in at least one database.

10. The method of claim 1, comprising associating the electronic device (200) to a plurality of items (300ᵢ) with i = 1.... N, each of the plurality of items being provided with a code (301ᵢ) with i= 1..... n.

11. A system for dynamically updating information referred to an item, comprising:
- an electronic device (200) configured to be associated with at least one item (300), said electronic device (200) and said at least one item (300) both including a code (201), (301) that at least identify properties thereof;
- a computing processor (101) installed in a mobile computing device (100) of a user and related with the electronic device (200), the computing processor (101) being configured to be used for performing the association of the electronic device (200) with the at least one product (300) by:
• detecting said codes (201) and (301); and
• deciding which information about said at least one item (300) should be associated to said electronic device (200); and
- a central server (400) configured to receive from the computing processor (101) via a telecommunication network (500) the detected codes (201) and (301) and the decided information about said at least one item (300), and to update, through a processor (202) installed in the electronic device (200), the information about said at least one item (300) in the electronic device (200).

12. The system of claim 11, wherein:
- the electronic device (200) comprises at least an electronic display;
- the code (201) of the electronic device (200) comprises a machine readable code that is shown via the display or attached to the display; and
- the code (301) of said at least one item (300) comprises a machine readable code attached to said item (300);
the machine readable code including at least a barcode, a QR code, an alphanumeric code or a numeric code, and the mobile computing device (100) including means selected from a group at least comprising a scanner and/or a camera for acquiring said codes (201), (301).

13. The system of claim 11, wherein:
- the code (201) of the electronic device (200) comprises a wireless tag; and
- the code (301) of the at least one item (300) comprises a wireless tag attached to said item (300);
the wireless tag including at least an RFID tag or a NFC tag and the mobile computing device (100) including a wireless detector for acquiring the codes (201), (301).

14. The system of claim 11, wherein the central server (400) comprises at least one database to store the received codes (201) and (301) and the received decided information about said at least one item (300).

15. A computer program product comprising computer executable software stored on a computer readable medium, the software being adapted to run at a computer device or other processing means **characterized in that** when said computer executable software is loaded and read by said computer device or other processing means, said computer device or other processing means is able to perform the steps of the method according to any of claims 1, 2, 6, 9, 10.
